(19) Europäisches Patentamt
European Patent Office
Office européen des brevets

(11) **EP 2 548 736 A1**

(12) **EUROPEAN PATENT APPLICATION**
published in accordance with Art. 153(4) EPC

(43) Date of publication:
23.01.2013 Bulletin 2013/04

(51) Int Cl.:
*B32B 27/32* (2006.01)    *B32B 5/32* (2006.01)
*H01M 2/16* (2006.01)

(21) Application number: 11756302.3

(22) Date of filing: 15.03.2011

(86) International application number:
PCT/JP2011/056070

(87) International publication number:
WO 2011/115117 (22.09.2011 Gazette 2011/38)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 18.03.2010 JP 2010062202

(71) Applicant: Mitsubishi Plastics, Inc.
Tokyo 100-8252 (JP)

(72) Inventors:
• TERAKAWA, Toru
Nagahama-shi
Shiga 526-8660 (JP)

• YAMADA, Takeyoshi
Nagahama-shi
Shiga 526-8660 (JP)
• USAMI, Yasushi
Nagahama-shi
Shiga 526-8660 (JP)

(74) Representative: Gille Hrabal
Brucknerstraße 20
DE-40593 Düsseldorf (DE)

(54) **POROUS POLYOLEFIN RESIN FILM AND SEPARATOR FOR BATTERY**

(57) As an object of the present invention, to provide a polyolefin resin porous film fulfilling high continuity, excellent dimensional stability and shutdown function which closes the pores sensitively and completely in a temperature range of 120 to 140°C without closing the pores at less than 120°C. The present invention relates to a polyolefin resin porous film having at least one layer each of a layer comprising as the main component a polypropylene resin composition (A) and a layer comprising as the main component a polyethylene resin composition (B) fulfilling the condition (i) the melting point of the polyethylene resin composition (B) is 130°C or higher, and the condition (ii) the melt flow rate (MFR) of the polyethylene resin composition (B) is 2.0 to 15 g/10 minutes.

[Fig. 1]

EP 2 548 736 A1

**Description**

[Technical field]

The present invention relates to a porous film having a polyolefin resin as the main component. In particular, it relates to a polyolefin resin porous film that can be used suitably as a non-aqueous electrolyte battery separator for a lithium ion secondary battery, or the like, used as a power source in various electronic devices, or the like.

[Background art]

Polymeric porous bodies, which have multiple microscopic continuous holes, are being used in various fields such as separatory membranes used in the production of ultra-pure water, the purification of drug solution, water treatment and the like, waterproof moisture-permeable films used in clothing/hygiene materials and the like, or, battery separators.
Repeatedly charge-dischargeable secondary batteries widely are used as power sources of portable devices such as for OA (office automation), FA (factory automation), household appliances, communication devices or the like. Among them, lithium ion secondary batteries have satisfactory volume efficiency when equipping a device, leading to a decrease in the size and weight of the instrument, such that portable devices in which lithium ion secondary batteries are used are increasing. In addition, recently, research and development of large secondary batteries have been proceeding in a number of fields related to energy/environment problems, beginning with load leveling, UPS (uninterruptible power supply) and electric cars, and since lithium ion secondary batteries, which are one type of non-aqueous electrolytic solution secondary batteries, have large capacity, high output, high voltage and excellent long-term conservation ability, application to large batteries is broadening.
The working voltage of a lithium ion secondary battery, in general, is designed with 4.1 V to 4.2 V as the upper limit. Since electrolysis is provoked at such high voltages, aqueous solutions cannot be used as electrolytic solutions. Therefore, a so-called non-aqueous electrolytic solution, in which an organic solvent has been used, is used as electrolytic solution that can withstand even high voltages.
High-permittivity organic solvents, which allow more lithium ions to be present, are used as solvents for non-aqueous electrolytic solutions, and organic carbon acid ester compounds, such as propylene carbonate and ethylene carbonate, are mainly used as the high-permittivity organic solvents.
As supporting electrolyte that becomes a source of lithium ions in the solvent, one comprising an electrolyte with high reactivity such as lithium hexafluorophosphate dissolved in the solvent is used.
In a lithium ion secondary battery, from the point of preventing an internal short circuit, a separator is intercalated between the positive electrode and the negative electrode.
The separator, in addition to being required from the role thereof to have insulation property, also needs to be stable in an organic electrolytic solution. In addition, it must have a microporous structure for the purpose of retaining the electrolytic solution, as well as securing a route for the lithium ions to go back and forth between the electrodes during charging and discharging. In order to meet these requirements, porous films having an insulating material such as polyolefin resin as the main component are used as separators.
As production methods for the separator, they are divided broadly into two classes, the wet biaxial stretching methods and the dry uniaxial stretching methods, and the pore structures differ significantly by the respective production methods.
Wet biaxial stretching methods are techniques in which a polyethylene resin and an added component such as a plasticizer are mixed and formed into a sheet and then pore structures are formed either by removing the added component with a solvent and stretching or by stretching and then removing the added component with a solvent, allowing a three dimensional network structure to be formed.
Separators obtained by such wet biaxial stretching methods have the merit that, the wettability and liquid holding ability to the electrolytic solution being adequate, the possibility of provoking an internal short-circuit of the battery is low even when lithium dendrites are deposited; however, there are disadvantages such as, since a solvent is used in the production, the costs are elevated, and since time is required for the extraction, the line speed is limited.
Elsewhere, dry uniaxial stretching methods are techniques in which a crystalline polyolefin resin is melt-extruded, solidified by cooling into sheet-form at a high draft rate to produce a sheet with high crystal anisotropy, and the obtained sheet is stretched in the machine direction thereby forming a porous structure, and can produce a separator provided with a porous structure that is elongated in the machine direction.
Separators obtained by such dry uniaxial stretching methods, not only have undesirable wettability and liquid holding ability to the electrolytic solution, but also have the possibility of provoking an internal short-circuit of the battery when lithium dendrites are deposited, due to a pore structure with low path tortuosity.
As methods that are capable of overcoming such shortcomings in these wet biaxial stretching method and dry uniaxial stretching production method, dry biaxial stretching methods can be cited, which use a crystal form of polypropylene resin called β-crystal for porositization.

When a polypropylene resin is solidified by cooling from a molten state, in general, a crystal form called α-crystal is formed in priority. β-crystals can be formed preferentially by adding an additive called a β-crystal nucleating agent. Consequently, a polypropylene resin sheet containing large amounts of β-crystals is obtained by melting a polypropylene resin containing a β-crystal nucleating agent, followed by molding into a film and solidifying by cooling. When this sheet is stretched, β-crystals provoke a rearrangement into α-crystals, and a craze is formed concomitantly to this rearrangement. Widening this craze by biaxial stretching forms a continuous hole, allowing a polypropylene resin porous film having a three-dimensional pore structure to be obtained. According to such a production method, a non-aqueous electrolyte battery separator having a three-dimensional pore structure can be manufactured at low costs with common film production and stretching equipment, without using a solvent.

However, polypropylene resin porous films obtained by dry biaxial stretching methods, which use β-crystals for porositization, have the disadvantage that, in terms of resin properties, the melting point being on the order of 170°C, do not have the shutdown function described below.

In non-aqueous electrolyte batteries and particularly lithium ion batteries, there is the possibility that when a battery short-circuits, the battery provokes an abnormal heat generation, and the temperature raises abruptly. In such a case, as there is a possibility of leading to a disasters such as explosion and ignition, such as by boiling of the electrolytic solution, there is often a countermeasure from the point of view of battery safety, which confers to the separator a function for blocking the battery current during an abnormal heat generation. This function is called "shutdown function".

The mechanism of shutdown function of the separator is one in which a component of the separator melts by the rising of the battery temperature up to a specific temperature, closing the pores of the separator thereby blocking the current. As the specific temperature, although dependent on the constitution of the battery, roughly 120 to 140°C is common, and polyethylene resins having melting points in the above temperature range are often used as components of a separator.

There have been various studies in prior art in order to confer a shutdown function to polypropylene resin porous films produced by dry biaxial stretching methods using β-crystals of polypropylene resins. For instance, in the inventions described in Patent Reference 1 (Japanese Patent Application Laid-open No. 2009-019118) and Patent Reference 2 (Japanese Patent Application Laid-open No. 2009-114434), a propylene resin porous film produced by the dry biaxial stretching described above is coated with particles which softening point is 100 to 150°C thereby conferring a shutdown function.

In addition, a separator comprising a polypropylene resin having β-crystal activity and a polyethylene resin is proposed in Patent Reference 3 (Patent No. 3523404).

[Prior art references]

[Patent Reference]

[Patent Reference 1] Japanese Patent Application Laid-open No. 2009-019118
[Patent Reference 2] Japanese Patent Application Laid-open No. 2009-114434
[Patent Reference 3] Patent No. 3523404

[Summary of the invention]

[Problems to be solved by the invention]

With the methods proposed by the Patent References 1 and 2, since a low-molecular weight polyethylene resin and a low-melting point binder are used, realization of a shutdown function whereby the pores are not closed at less than 120°C, and moreover, the pores are closed sensitively and completely in the temperature range of 120 to 140°C, was insufficient.

In addition, with the method proposed by the Patent Reference 3, there is the problem that, as continuity is insufficient and air-permeability is high, when the film is used as a non-aqueous electrolyte battery separator, the internal resistance of the non-aqueous electrolyte battery becomes higher. Meanwhile, even if air-permeability can be lowered by adjusting such production conditions as the stretching conditions, dimensional stability is insufficient due to the thermal shrink rate being high. For this reason, when the film is used as a non-aqueous electrolyte battery separator, there is the danger that the separator contracts during heat generation, the electrodes enter into contact with one another, and non-aqueous electrolyte battery provokes an internal short circuit.

The present invention was devised in view of such problems. That is to say, the problems to be solved by the present invention is to provide a novel polyolefin resin porous film capable of realizing high continuity, excellent dimensional stability and a shutdown function that does not close the pores at less than 120°C and, moreover, closes the pores sensitively and completely in a temperature range of 120 to 140°C.

[Means to solve the problems]

The present invention proposes a polyolefin resin porous film having at least one layer each of a layer comprising as the main component a polypropylene resin composition (A) and a layer comprising as the main component a polyethylene resin composition (B) fulfilling the conditions (i) to (ii) below:

(i) the melting point of the polyethylene resin composition (B) is 130°C or higher
(ii) the melt flow rate (MFR) of the polyethylene resin composition (B) is 2.0 to 15 g/10 minutes

The polyolefin resin porous film proposed by the present invention is capable of realizing high continuity, excellent dimensional stability and a shutdown function that does not close the pores at less than 120°C and, moreover, closes the pores sensitively and completely in a temperature range of 120 to 140°C.

[Brief description of the drawings]

[Fig. 1] A cross-sectional view showing schematically a constitution example of a battery housing an example of polyolefin resin porous film according to the present invention.
[Fig. 2] A view for describing an example of method for immobilizing a polyolefin resin porous film in a shutdown function and an X-ray diffraction measurements.

[Modes for carrying out the invention]

Hereafter, example of embodiment of the polyolefin resin porous film according to the present invention (hereafter referred to as "the present porous film") will be described in detail.

<The present porous film>

The present porous film is a polyolefin resin porous film having at least one layer each of an A layer having a polypropylene resin composition (A) as the main component and a B layer having a polyethylene resin composition (B) as the main component.
Concretely, two-layer structures in which A layer/B layer have been layered, three-layer structures layered as A layer/B layer/A layer or B layer/A layer/B layer, and the like, can be given as examples. In addition, a morphology such as three-species and three layers in combination with a layer having another function, is also possible. In this case, the layering order with the layer having another function does not matter in particular. As necessary, 4 layers, 5 layers, 6 layers and 7 layers are possible as the number of layers.
As methods for layering each of these layers, various techniques can be used, such as co-extrusion, lamination and coating.

<A layer>

The A layer is a layer having a polypropylene resin composition (A) as the main component.
Here, the polypropylene resin composition (A) is a composition containing one or more species of polypropylene resin as the main component and may have less than 50% by mass of materials other than polypropylene resin mixed-in. For instance, it may contain a plurality of polyolefin resins with different structures. In addition, it may contain as other components a resin component other than polyolefin resin, an oligomer, or a low molecular weight compound. In addition, when a plurality of species of resin or other components are used, the dispersion state does not matter, and they may be mutually phase-dissolved or phase-separated.

(Polypropylene resin)

As polypropylene resin, for instance, homopolypropylene (propylene homopolymer), or, random copolymer or block copolymer of propylene and an α-olefin such as ethylene, 1-butene, 1-pentene, 1-methylpentene, 1-hexene, 1-heptene, 1-octene, 1-nonene or 1-decene, and the like, or block copolymer may be cited. Among these, from the point of view of mechanical strength of the porous film, homopolypropylene is used more suitably.

As polypropylene resin, it is desirable that the isotactic pentad fraction (mmmm fraction), which indicates stereoregularity, is 80 to 99%. More desirable is 83 to 99%, and even more desirable is 85 to 99%. If the isotactic pentad fraction is too low, there is the risk that the mechanical strength of the film decreases. Meanwhile, regarding the upper limit of the isotactic pentad fraction, it is governed by the upper limit value obtained industrially at the current time point. Regarding when a resin with higher regularity is developed at the industry level in the future, this is not the limit.

The isotactic pentad fraction (mmmm fraction) means the tertiary structure in which five methyl groups, which are side chains, are all located in the same direction with respect to a main chain of carbon-carbon bonds constituted by five arbitrary successive propylene units, or the proportion thereof. Attribution of a signal in the methyl group region is according to A. Zambelli et al. (Macromolecules 8, 687, (1975)).

In addition, for the polypropylene resin, desirable are those in which the degree of polydispersity, which is a parameter indicating the molecular weight distribution, that is to say, the ratio (Mw/Mn) between the weight average molecular weight Mw and the number average molecular weight Mn, is 1.5 to 10.0. More desirable is 2.0 to 8.0, and even more desirable is 2.0 to 6.0. A smaller Mw/Mn means the molecular weight distribution is narrower. If Mw/Mn is less than 1.5, in addition to problems arising, such as extrusion-molding ability decreases, industrial production becomes also difficult. Meanwhile, if Mw/Mn exceeds 10.0, there are more low molecular weight components and the mechanical strength of the present porous film is prone to decrease.

The Mw/Mn is a value that is obtained by the GPC (gel permeation chromatography) method.

The MFR of the polypropylene resin composition (A) is not limited in particular. In general, the MFR is preferably 0.1 to 15 g/10 minutes, and 0.5 to 10 g/10 minutes is more desirable. By having the MFR at 0.1 g/10 minutes or greater, stable productivity can be secured as there is sufficient molten viscosity in the forming process. Meanwhile, being at 15 g/10 minutes or lower allows the mechanical strength of the porous film to be retained sufficiently.

In addition, for the purpose of quality-improvement, heat stabilization, or the like, of the polypropylene resin composition (A), other resins or various additives may be mixed and used. In particular, since a polypropylene resin has a tertiary carbon in the resin backbone, it is prone to deterioration, such that oxidation inhibitors and heat stabilizers are often added. Hindered phenols and hydroxylamines are known as the oxidation inhibitors. Phosphoric heat stabilizers and sulphuric heat stabilizers are known as the heat stabilizers.

($\beta$-crystal nucleating agent)

When using the present porous film as a non-aqueous electrolyte battery separator, a $\beta$-crystal nucleating agent is preferably added to the polypropylene resin in order to obtain the required porous structure.

As $\beta$-crystal nucleating agents, for instance, amide compounds; tetraoxaspiro compound; quinacridones; iron oxides having nano-scale size; alkaline or alkaline earth metal salts of carboxylic acids represented by potassium 1,2-hydroxystearate, magnesium benzoate or magnesium succinate, magnesium phthalate and the like; aromatic sulfonic acid compounds represented by sodium benzenesulfonate or sodium naphthalenesulfonate and the like; di- or triesters of di- or tribasic carboxylic acids; phthalocyanine series pigments represented by phthalocyanine blue and the like; binary compounds comprising a component A that is an organic dibasic acid and a component B that is an oxide, a hydroxide or a salt of a Group IIA metal from the periodic table; compositions comprising a cyclic phosphorous compound and a magnesium compound, and the like, may be cited. In addition, Japanese Patent Application Laid-open No. 2003-306585, Japanese Patent Application Laid-open No. H06-289566, and Japanese Patent Application Laid-open No. H09-194650 give descriptions regarding concrete species of nucleating agent.

As concrete examples of commercially available $\beta$-crystal nucleating agent, for instance, the $\beta$-crystal nucleating agent "NJSTAR NU-1 00" manufactured by New Japan Chemical Co., Ltd., and the like, can be cited. As concrete examples of commercially available polypropylene series resin in which a $\beta$-crystal nucleating agent has been added, for instance, polypropylene "Bepol B-022SP" manufactured by Aristech, polypropylene "Beta ($\beta$)-PP BE60-7032" manufactured by Borealis, polypropylene "BNX BETAPP-LN" manufactured by Mayzo, and the like, may be cited

It is desirable to adjust the proportion of $\beta$-crystal nucleating agent to be added to the polypropylene series resin suitably according to the species of the $\beta$-crystal nucleating agent or the composition of the polypropylene resin, and the like. Adding 0.0001 to 5.0 parts by mass of $\beta$-crystal nucleating agent with respect to 100 parts by mass of polypropylene resin is desirable, adding 0.001 to 3.0 parts by mass is more desirable, and adding 0.01 to 1.0 parts by mass is further desirable. If 0.0001 parts by mass or more $\beta$-crystal nucleating agent is added with respect to 100 parts by mass of polypropylene resin, sufficient $\beta$-crystal activity can be secured by generating/growing sufficient $\beta$-crystals of polypropylene series resin during production, sufficient $\beta$-crystal activity can also be secured when the porous film is obtained, and the desired air-permeating capability is obtained. Meanwhile, if the addition is 5.0 parts by mass or less, not only is it economically advantageous, but there is also no bleeding or the like of the $\beta$-crystal nucleating agent onto the porous film surface, which is desirable.

<B layer>

The B layer is a layer having a polyethylene resin composition (B) as the main component.
Here, the polyethylene resin composition (B) is a composition containing one or more species of polyethylene resin as the main component and may have less than 50% by mass of materials other than polyethylene resin mixed-in. For instance, it may contain a plurality of polyethylene resins with different structures. In addition, it may contain as other components a resin component other than polyethylene resin, an oligomer, or a low molecular weight compound. In addition, when a plurality of species of resin or other components are used, the dispersion state does not matter, and they may be mutually phase-dissolved or phase-separted.

(Components of polyethylene resin composition (B))

As the main component of the polyethylene resin composition (B), polyethylenes such as, for instance, ultra-low density polyethylenes, low density polyethylenes, linear low density polyethylenes, medium density polyethylenes, high density polyethylenes or ultra-high density polyethylenes may be cited. In addition, a copolymer component such as ethylene-propylene copolymer may be used as the main component. Of these, one species alone may be used, or two or more species may be mixed and used. Among them, high density polyethylene resin alone having high crystallinity is desirable.

It is desirable for the polyethylene resin composition (B) to contain a polyethylene resin X which MFR is 3.0 to 30 g/10 minutes. By containing a polyethylene resin X which MFR is 3.0 g/10 minutes or greater, the molten viscosity of the polyethylene resin composition (B) is lowered, which facilitates closing completely the pores of a porous film formed in the stretching conditions described below. In addition, residual stresses remaining in the fibril structure formed in the present porous film can be alleviated more effectively in the heat-treatment process described below, allowing the thermal shrink rate in the direction perpendicular to the flow direction of the film to be suppressed. Meanwhile, stable molding becomes possible with the MFR of the polyethylene resin X being 30 g/10 minutes or lower.

It is desirable for the polyethylene resin composition (B) to contain 10% by mass or more polyethylene resin X, and containing 25% by mass or more is more desirable. If the content in the polyethylene resin X is 10% by mass or more, the residual stress alleviating effect and shutdown function by the polyethylene resin X can be exerted sufficiently.

Production methods for the polyethylene resin X are not limited in particular, and well-known polymerization methods using well-known olefin polymerization catalysts, for instance, polymerization methods using multi-site catalysts represented by Ziegler-Natta type catalysts, and single-site catalysts represented by metallocene series catalysts, and the like, may be cited.

A crystal nucleating agent may be added in order to promote crystallization of the polyethylene resin composition (B). A crystal nucleating agent is desirable as there is an effect of controlling the crystal structure of the polyethylene resin and refining the porous structure during pore-opening by stretching.
As commercially available crystal nucleating agents, "Gelol D" (manufactured by New Japan Chemical Co., Ltd.), "ADK STAB" (manufactured by ADEKA Corporation), "Hyperform" (manufactured by Milliken Chemical), or "IRGACLEAR D" (manufactured by Ciba Specialty Chemicals Corporation), and the like, may be cited.
In addition, as polyethylene resins added with a crystal nucleating agent, for instance "RIKEMASTER" (manufactured by Riken Vitamin Co., Ltd.), and the like, are available commercially.

(Physical properties of polyethylene resin composition (B))

For the MFR of the polyethylene resin composition (B) to be 2.0 to 15 g/10 minutes is important, and to be 2.2 to 10 g/10 minutes is desirable. With the MFR being 2.0 g/10 minutes or greater, sufficient shutdown function can be conferred when the film is used as a non-aqueous electrolyte battery separator. That is to say, even if stretching at high temperature was carried out to open the pores widely in the film production process and stretching process described below for the purpose of reducing thermal shrink rate and lowering air-permeability, since fluidity is high at the melting point of the polyethylene resin composition (B) or higher, the holes can be closed more effectively. Meanwhile stable film production and stretching becomes possible with the MFR being 15 g/10 minutes or lower.

For the melting point of the polyethylene resin composition (B) to be 130°C or higher is important, and to be 132°C or higher is desirable. If the melting point of the polyethylene resin composition (B) is under 130°C, the melting point width is broad from the fact that crystallinity is low, such that, when the film is used as a non-aqueous electrolyte battery separator, there is the possibility of the pores also closing in uses at under 120°C, provoking a decrease in the output. In addition, as the present porous film contains a polyethylene resin, since the pores close if stretching and heat-treatment are carried out at the melting point of the polyethylene resin or higher, it is important for the melting point of the polyethylene resin composition (B) to be 130°C or higher.

Regarding methods for measuring a melting point, it suffices to use a differential scanning calorimeter (DSC-7) as described below. If plurality of the peak temperatures appear during the measurement, the lowest peak temperature serves as the melting point of the polyethylene resin composition (B).

<Other components in A layer and B layer>

A substance that promotes porositization, a lubricant or the like, may be added with respect to the polypropylene resin composition (A) or the polyethylene resin composition (B) or both of these in the A layer and the B layer. For instance, a modified polyolefin resin, an alicyclic saturated hydrocarbon resin or a modified body thereof, an ethylene series copolymer, a wax, a macromolecular filler, an organic filler, an inorganic filler, a metal soap, a fatty acid, a fatty acid ester compound, a fatty acid amide compound, or the like, may be added suitably.

The modified polyolefin resins include resins having as the main component a polyolefin modified with an unsaturated carboxylic acid or an anhydride thereof, or a silane series coupling agent. Then as the unsaturated carboxylic acid or the anhydride thereof, for instance, acrylic acid, methacrylic acid, maleic acid, anhydrous maleic acid, citraconic acid, anhydrous citraconic acid, itaconic acid, anhydrous itaconic acid or ester compounds between the acids and the monoepoxide compounds of the derivatives thereof, reaction products between the acids and polymers having intramolecularly a group that may react with these acids, and the like, may be cited. In addition, these metal salts thereof can also be used.

As the alicyclic saturated hydrocarbon resins and modified bodies thereof, for instance petroleum resin, rosin resin, terpene resin, coumarone resin, indene resin, coumarone-indene resin, and modified bodies thereof, and the like, may be cited.

For the ethylene series copolymer, those in which the content percentage of ethylene monomer unit is 50% by mass or more are desirable, more preferably 60% by mass or more, and further preferably 65% by mass or more. Meanwhile, regarding the upper limit, those in which the content percentage of the ethylene monomer unit is 95% by mass or less are desirable, and more preferably 90% by mass or less, and further preferably 85% by mass or less are desirable.

The above waxes include polar or nonpolar waxes, polypropylene waxes, polyethylene waxes and wax modifiers. Concretely, for instance, polar waxes, nonpolar waxes, Fischer-Tropsch waxes, oxidized Fischer-Tropsch waxes, hydroxystearamide waxes, functionalized waxes, polypropylene waxes, metallocene-catalyzed polypropylene waxes, polyethylene waxes, wax modifiers, amorphous waxes, carnauba waxes, castor oil waxes, microcrystalline waxes, beeswax, castor waxes, vegetable waxes, candelilla waxes, Japanese waxes, ouricury waxes, Douglas fir bark waxes, rice bran waxes, jojoba waxes, bayberry waxes, montan waxes, ozokerite waxes, ceresin waxes, petroleum waxes, paraffin waxes, chemically modified hydrocarbon waxes, substitutional amide waxes, and combinations and derivatives thereof may be cited.

As the macromolecular fillers, organic fillers and inorganic fillers mentioned above, for instance, filler compounds that do not phase-dissolve with the polyolefin resin, and the like, may be cited. The filler compound is one that forms pores by being detached at the interface with the polyolefin resin when stretched, and is particularly effective when adjusting air-permeability and pore sizes when performing control of the pore structure.

As the metal soaps, fatty acids, fatty acid ester compounds and fatty acid amide compounds mentioned above, for instance, calcium stearate, magnesium stearate, aluminum stearate, stearic acid, oleic acid, erucic acid, lauric acid, oleic acid, methyl laurate, methyl stearate, methyl oleate, methyl erucate, butyl stearate, octyl stearate, pentaerythritol tetrastearate, ethylene bis stearic acid amide, stearic acid monoamide, ethylene bis oleic acid amide, ethylene bis erucic acid amide, and the like, may be cited.

<Physical properties of the present porous film>

Next, physical properties of the present porous film will be described.

(Thickness)

The thickness of the present porous film is preferably 3 $\mu$m or greater, and more preferably is 5 $\mu$m or greater. If the thickness is under 3 $\mu$m, the danger of an internal short circuit of the battery is increased due to a lack of strength. Meanwhile, regarding the upper limit of the thickness, it is preferably 100 $\mu$m or less, more preferably is 80 $\mu$m or less, and further preferably is 60 $\mu$m or less. If the thickness is above 100 $\mu$m, the battery output decreases due to the distance between the electrode being large. In addition, as the volume occupied by the electrodes inside the battery becomes relatively low, the battery capacity decreases.

(Porosity)

The porosity of the present porous film is preferably 20% or greater and more preferably is 30% or greater. If the porosity is 20% or greater, the porous film can have sufficient continuity, allowing sufficient battery output to be achieved. In addition, it can also have sufficient liquid-holding amount for the electrolytic solution. Meanwhile, regarding the upper limit of the porosity, it is preferably 80% or less. If the porosity is 80% or less, sufficient strength of the porous film can be obtained. With securing the strength sufficiently, deformation of the film due to tension when winding the cylindrical battery, tearing of pores by the rough surface of a neighboring electrode, and rupture of the film by deposition of lithium dendrites can be prevented, allowing the danger of an internal short circuit of the battery to be prevented.

(Air-permeability)

The air-permeability of the present porous film is preferably 10 to 800 seconds/100 ml, more preferably is 10 to 600 seconds/100 ml, and further preferably is 10 to 500 seconds/100 ml. If the air-permeability is 10 seconds/100 ml or greater, when the film is used as a non-aqueous electrolyte battery separator, rupture of the film by deposition of lithium dendrites is prevented owing to the pore size being large, allowing the danger of an internal short circuit of the battery to be prevented. Meanwhile, if air-permeability is800 seconds/100 ml or less, internal resistance of the battery becomes sufficiently low, leading to a drop in the battery output.

(Thermal shrink rate)

Regarding the thermal shrink rate of the present porous film, the thermal shrink rate in the perpendicular direction with respect to the flow direction of the porous film (TD thermal shrink rate) is preferably less than 10%. When using the polyolefin resin porous film as a non-aqueous electrolyte battery separator, it is often integrated into the non-aqueous electrolyte battery in the form of layered units described as positive electrode/separator/negative electrode/separator which have been stacked. In particular, a cylindrical battery generally called 18650 cell is produced by overlaying the layered units into a band-shape and winding. Thus, if the separator heat-shrinks under a high temperature environment, the possibility arises that the positive electrode and the negative electrode come into contact, elevating the danger that the non-aqueous electrolyte battery short-circuits internally. Consequently, it is desirable that the TD thermal shrink rate is less than 10%. In addition, it is desirable that the thermal shrink rate in the flow direction (MD thermal shrink rate) is also less than 10% similarly to the TD thermal shrink rate, in order to prevent the danger of internal short circuit.

(Shutdown function)

When the present porous film has been used in the separator of a non-aqueous electrolyte battery, as a safety mechanism in the event that the non-aqueous electrolyte battery has provoked a thermal runaway, it is desirable that the present porous film has a shutdown function.
Regarding the evaluation methods for the presence or absence of shutdown function, a description will follow. Concretely, it is desirable that the air-permeability after heating at 135°C for 5 seconds is 50,000 seconds/100 ml or greater.

<Production method for the present porous film>

As a preferred mode of the production methods for the present porous film, a method can be cited, whereby at least one layer each of a layer having the polypropylene resin composition (A) as the main component and a layer having the polyethylene resin composition (B) as the main component are layered and co-extruded from a T-die thereby constituting a layered pore-free sheet, and the layered pore-free sheet is stretched thereby forming multiple pores having continuity in the thickness direction.
For the pore-free sheet production method, it suffices that well-known methods are used. For instance a method can be cited, whereby, using an extruder, a resin composition is melted, co-extruded from a T-die, solidified by cooling with cast rolls. In addition, a method can be applied, whereby a film produced by a tubular method is cut open and planarized.
Regarding stretching methods for the pore-free sheet, there are techniques such as roll drawing method, rolling method, tenter stretching method and simultaneous biaxial stretching method, and it is desirable to carry out stretching at least in one axial direction with these, alone or by combining two or more. Among these, biaxial stretching is more desirable from the point of view of porous structure control.
As an all the more preferred mode of the production methods for the present porous film, a layered porous film production method can be cited, whereby a layered pore-free sheet of two species in three layers comprising front and back layers having as the main component a polypropylene resin composition (A) having β-crystal activity and a middle layer having as the main component a polyethylene resin composition (B) is produced by co-extrusion from a T-die and porositized by biaxial stretching. This production method will be described below.

The polypropylene resin composition (A) constituting the front and back layers preferably contains at least a polypropylene resin and a β-crystal nucleating agent. These raw materials are mixed preferably using a Henschel mixer, a super mixer, a tumbler-type mixer, or the like, or by placing all the constituents into a bag and hand-blending, then, melt-kneaded with a single screw or a twin screw extruder, a kneader or the like, preferably a twin screw extruder, then, extruded from a strand die into a water bath and pelletized by cutting while pulling-out the strand.

Regarding the production method for the polyethylene resin composition (B) constituting the middle layer, raw materials such as polyethylene resin and as necessary other additives are mixed using a Henschel mixer, a super mixer, a tumbler-type mixer, or the like, then, melt-kneaded with a single screw or a twin screw extruder, a kneader or the like, preferably a twin screw extruder, then, extruded from a strand die into a water bath and pelletized by cutting while pulling-out the strand.

Pellets of the polypropylene resin composition (A) and pellets of the polyethylene resin composition (B) are introduced into separate extruders and extruded from a T-die co-extrusion port. As the type of T-die, whether it is a multi-manifold type for two species in three layers or a feed block-type for two species in three layers does not matter.

The gap of the T-die is preferably determined by the thickness of the film ultimately needed, the stretching conditions, the draft rate, various conditions and the like. In general, the T-die gap is on the order of 0.1 to 3.0 mm, and preferably 0.5 to 1.0 mm. At less than 0.1 mm, it is not desirable from the point of view of production speed due to high extrusion pressure loss at the lips. If greater than 3.0 mm, it is not desirable from the point of view of production stability as the draft rate becomes greater.

In the extrusion-molding, it is desirable to adjust the extrusion process temperature suitably according to the flowing properties, molding ability, and the like, of the resin composition. For the extrusion process temperature roughly 150 to 300°C is desirable, and a range of 180 to 280°C is further desirable. If 150°C or higher, the viscosity of the molten resin is sufficiently low with excellent molding ability, which is desirable. Meanwhile, at 300°C or lower, deterioration of the resin composition can be suppressed.

The cooling-solidification temperature of the cast rolls is extremely important in the present invention, and a control thereof allows the β-crystals in the sheet prior to stretching to be generated/grown to adjust the β-crystal ratio in the sheet. The cooling-solidification temperature of the cast rolls is preferably 80 to 150°C, more preferably 100 to 140°C and even more preferably 110 to 135°C. If the cooling-solidification temperature is brought to 80°C or higher, the β-crystal ratio in the sheet solidified by cooling can be increased sufficiently, which is desirable. In addition, by being at 150°C or lower, such trouble as the extruded molten resin adheres and winds onto a cast roll is unlikely to occur, allowing the resin to be turned into a sheet efficiently, which is desirable.

It is desirable that the β-crystal ratio of the obtained pore-free sheet prior to stretching is adjusted to 30 to 100% by setting the cast rolls to the temperature range described above. Adjusting to 40 to 100% is more desirable, and adjusting to 60 to 100% is particularly desirable. By having the ratio of β-crystals in the pore-free sheet prior to stretching at 30% or greater, porositization is facilitated in the subsequent stretching operation, allowing a porous film having excellent air-permeating properties to be obtained.

β-crystal ratio of the pore-free sheet is measured using a differential scanning calorimeter by raising the temperature from 25°C to 240°C at a heating rate of 10°C/minute. Such measurements can be carried out with a sample amount of 10 mg and under nitrogen atmosphere.

The presence or absence of β-crystal activity can be evaluated as follows by the β-crystal ratio calculated from the amount of heat of crystallization ($\Delta H_\beta$) derived from the melting of β-crystal of polypropylene having a peak top in the range of 150 to 164°C during the temperature rise and the amount of heat of crystallization ($\Delta H_\alpha$) derived from the melting of α-crystal of polypropylene having a peak top in the range of 165 to 180°C, according to the formula mentioned below:

$$\beta\text{-crystal ratio (\%)} = [\Delta H_\beta/(\Delta H_\beta+\Delta H_\alpha)] \times 100$$

In the stretching process, uniaxially stretching in the longitudinal direction or the transversal direction is adequate, and biaxially stretching is also adequate. In addition, when carrying out biaxial stretching, simultaneous biaxial stretching is adequate, and successive biaxial stretching is also adequate. When producing the present porous film, successive biaxial stretching, which allows the stretching conditions to be selected at each stretching process, and in which controlling the porous structure is facilitated, is more desirable.

Next, biaxially stretching the obtained pore-free sheet is desirable. The biaxial stretching may be simultaneous biaxial stretching or may be successive biaxial stretching. When producing the present porous film, successive biaxial stretching, which allows the stretching conditions to be selected at each stretching process, and in which controlling the porous structure is facilitated, is more desirable. Stretching in the machine (flow) direction (MD) is referred to as "longitudinal stretching", and stretching in a direction perpendicular to MD (TD) is referred to as "transversal stretching".

When carrying out successive biaxial stretching, the longitudinal stretch ratio is preferably 2 to 10-fold and more preferably 3 to 8-fold. Carrying out longitudinal stretching at 2-fold or greater allows a suitable degree of void origins to be generated. Carrying out longitudinal stretching at 10-fold or less allows a suitable degree of void origins to manifest.

Preferably, the stretching temperature is selected at suitable time according to the composition of the resin composition used, the crystal-melting peak temperature, the degree of crystallinity, and the like. The stretching temperature in longitudinal stretching is about 10 to 160°C and preferably controlled at 20°C to 150°C. In addition, if 10°C or higher, rupture during longitudinal stretching is unlikely to occur and formation of void origins is carried out, which is thus desirable. Meanwhile, if the stretching temperature in the longitudinal stretching is 160°C or lower, hole formation occurs in the polypropylene and thus an appropriate hole formation can be carried out.

The stretch ratio in the transversal stretching is preferably 1.5 to 9.0-fold, more preferably is 1.6 to 7.0-fold, and further preferably is 1.8 to 4.0-fold. By stretching transversally within the range described above, the void origins formed by longitudinal stretching are enlarged to a suitable degree, allowing fine porous structure to manifest while facilitating balancing the physical properties.

In order to obtain the desirable air-permeability, TD thermal shrink rate and shutdown function, bringing the transversal stretching temperature to 105 to 145°C is desirable, and bringing it to 108 to 138°C is more desirable. By bringing the transversal stretching temperature to 105°C or higher, since the residual strain exerted transversally during transversal stretching is reduced, the TD thermal shrink rate can be suppressed sufficiently, and since the holes become enlarged, satisfactory air-permeability can be obtained. Meanwhile, by bringing it to 145°C or lower, the pores can suppress degradation of air-permeability due to closure, without the polyethylene resin melting.

In addition, as the stretching speed of the transversal stretching, 500 to 12,000%/minute is desirable, 1,500 to 10,000%/minute is more desirable, and 2,500 to 8,000%/minute is further desirable.

With the purpose of improving dimensional stability, or the like, it is desirable for the present porous film obtained in this manner to carry out heat-treatment at a temperature of, for instance, 100 to 140°C and more preferably 120 to 138°C. In addition, a 1 to 25% relaxation treatment may be performed transversally, as necessary. After the heat-treatment, the present porous film is obtained by uniformly cooling and winding.

<Applications of the present porous film>

Next, as an example of application of the present porous film, a non-aqueous electrolyte battery separator in which the present porous film was used ("the present separator") will be described.

Production methods for the present separator will be described. However, the productions methods for the present separator are not limited to the methods described in the following.

As production methods for the non-aqueous electrolyte battery separator, well-known methods can be used, such as stretching method, extraction method, chemical treatment method, foaming method, or combinations of these techniques. Among them, using the stretching method is desirable.

As the stretching methods, methods in which a pore-free sheet is formed using a composition from a resin component and an immiscible component mixed thereto, and pores are formed by stretching, which peels the interface between the resin component and the immiscible component, and additionally, methods in which a pore-free sheet is formed by adding a specific crystal nucleating agent to the resin component so as to form spherical crystals, and pores are formed by stretching, and the like are known.

The extraction method is a method whereby an additive that is removable in post-processing is mixed into a resin composition, and after a pore-free sheet is formed, the additive is extracted by a chemical or the like to form pores. As additives, macromolecular additives, organic compound additives, inorganic additives, and the like, may be cited.

The chemical treatment methods are methods whereby micropores are formed by chemically breaking bonds in a macromolecular substrate, or conversely by carrying out a conjugation reaction. More concretely, methods whereby micropores are formed by chemical treatments such as redox agent treatment, alkali treatment and acid treatment may be cited.

<Non-aqueous electrolyte battery>

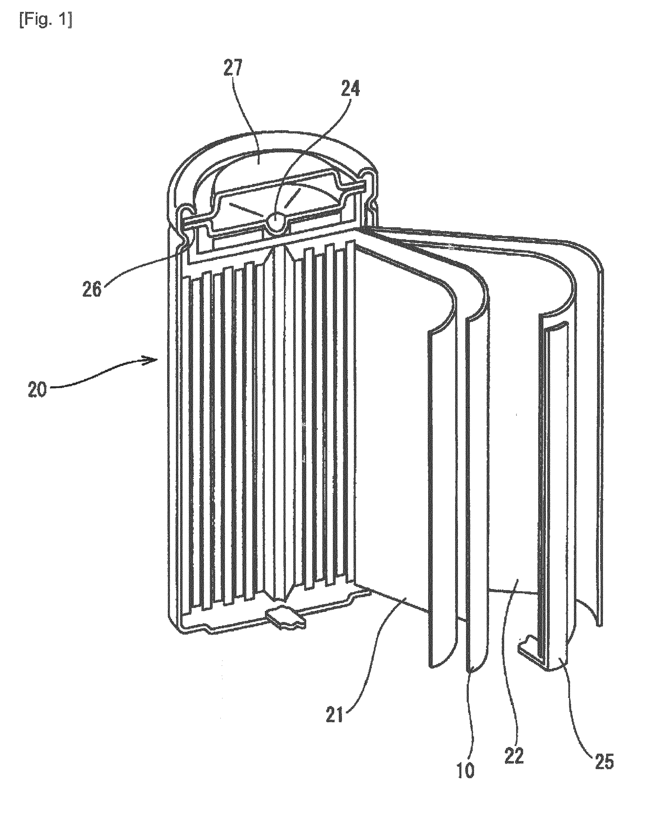

Next, an example of non-aqueous electrolyte battery containing the present porous film as a battery separator will be described while referring to Fig. 1.

Both poles of a positive electrode plate 21 and a negative electrode plate 22 are wound into a spiral-shape so as to overlap one another through a battery separator 10, and turned into a wound body by holding the outside with a roll-holding tape.

When winding into this spiral-shape, the thickness of the battery separator 10 is preferably 3 μm to 100 μm, and

particularly preferably is 5 to 80 $\mu$m. The battery separator is difficult to tear by having the thickness at 3 $\mu$m or greater. In addition, having the thickness at 100 $\mu$m or less allows the battery surface area to be enlarged when winding and housing the wound body into a predetermined battery can and consequently allows the battery capacity to be enlarged.

As a production method for a non-aqueous electrolytic solution battery, the wound body comprising the positive electrode plate 21, the battery separator 10 and the negative electrode plate 22 that have been wound integrally, is included inside a bottomed cylindrical battery case and welded to lead bodies 24, 25 of the positive electrode and the negative electrode. Next, elctrolytes are injected into the battery can, after the electrolytes have impregnated sufficiently the battery separator 10 and the like, a positive electrode lid 27 is sealed through a gasket 26 around the battery can opening, pre-charging and aging are carried out, allowing a cylindrical non-aqueous electrolytic solution battery to be produced.

An electrolytic solution which a lithium salt has been dissolved in an organic solvent can be used.

As organic solvent, for instance, esters such as propylene carbonate, ethylene carbonate, butylene carbonate, y-butyrolactone, y-valerolactone, dimethyl carbonate, methyl propionate or butyl acetate, nitriles such as acetonitrile, ethers such as 1,2-dimethoxy ethane, 1,2-dimethoxy methane, dimethoxy propane, 1,3-dioxolane, tetrahydrofuran, 2-methyl tetrahydrofuran or 4-methyl-1,3-dioxolane, or sulfolane and the like may be cited, and these can be used alone or by mixing two species or more. Among them, an electrolyte in which a lithium hexafluorophosphate ($LiPF_6$) has been dissolved at a proportion of 1.0 mol/L in a solvent comprising 2% by mass of methylethyl carbonate mixed with respect to 1% by mass of ethylene carbonate, is desirable.

As negative electrode, alkaline metal or a compound containing alkaline metal integrated with a power collection material such as a stainless steel mesh are used.

As the alkaline metal, for instance, lithium, sodium or potassium, and the like, may be cited. As the compound containing alkaline metal, for instance, an alloy between an alkaline metal and aluminum, lead, indium, potassium, cadmium, tin, magnesium or the like, furthermore, a compound between an alkaline metal and a carbon material, a compound between a low potential alkaline metal and a metal oxide or sulfide, and the like, may be cited.

When using a carbon material in the negative electrode, as carbon material, one that allows lithium ion doping and dedoping is adequate, and, for instance, graphite, pyrolytic carbons, cokes, glassy carbons, burned bodies of organic macromolecular compounds, mesocarbon micro beads, carbon fibers, activated charcoal and the like can be used.

As a more concrete example of negative electrode, a carbon material with an average particle size of 10 $\mu$m mixed to a solution comprising vinylidene fluoride dissolved in N-methyl pyrrolidone turned into a slurry, this negative electrode mixture slurry having been passed through a 70-mesh net to remove large particles, then, uniformly coated and dried on both sides of a negative electrode power collector consisting of an 18 $\mu$m-thick strip of copper foil, thereafter, compression molded with a roll press and then cut into a strip of negative electrode plate, can be cited.

As positive electrode, a metal oxide such as lithium cobalt oxide, lithium nickel oxide, lithium manganese oxide, manganese dioxide, vanadium pentoxide or chromium oxide, metal sulfide such as molybdenum disulfide, and the like, are used as active materials. A mixture comprising a conducting material and a binding agent, or the like, such as polytetrafluoroethylene suitably added to these positive electrode active materials, which has been finished as a molded body with a power collection material such as stainless steel mesh as a core, can be used as positive electrode.

As a more concrete example of positive electrode, flake graphite is added as conducting material and mixed with lithium cobalt oxide ($LiCoO_2$) at a mass ratio (lithium cobalt oxide:flake graphite) of 90:5, this mixture and a solution comprising polyvinylidene fluoride dissolved in N-methyl pyrrolidone are mixed to be turned into a slurry. This positive electrode mixture slurry passed through a 70-mesh net to remove large particles, then, uniformly coated and dried on both sides of a positive electrode power collector consisting of a 20 $\mu$m-thick aluminum foil, thereafter, compression-molded with a roll press and then cut into a strip of positive electrode plate can be given as an example.

<Explanation of terms>

In the present invention, when the expression "main component" is used, unless expressly mentioned, it includes the meaning of allowing other components to be contained to an extent that does not impede the functions of the main component, and does not specify in particular the proportion of the main component contained. The main component is one that includes the meaning of occupying 50% by mass or more within the composition, preferably 70% by mass or more, and particularly preferably 90% by mass or more (including 100%).

When the statement "X to Y" (X and Y are any numbers) is used, unless expressly stated otherwise, along with the meaning "X or greater but Y or lower", the meanings "preferably larger than X" and "preferably smaller than Y" are included.

In addition, also when the statement "X or greater" or "Y or less" (X and Y are any numbers) is used, unless expressly stated otherwise, the meanings "preferably larger than X" and "preferably smaller than Y" are included.

[Examples]

Hereafter, examples and comparative examples will be indicated to describe the polyolefin resin porous film of the present invention in further detail. However, the present invention is not limited to these.
The pull-out (flow) direction of the polyolefin resin porous film is noted "longitudinal" direction, and the direction perpendicular thereto, "transversal" direction.

[Example 1]

With respect to 100 parts by mass of polypropylene resin (manufactured by Japan Polypropylene Corporation; NOVATEC PP, FY6HA; MFR: 2.4g/10 minutes, melting point: 135°C), 0.1 parts by mass of 3,9-bis[4-(N-cyclohexyl carbamoyl)phenyl]-2,4,8,10-tetraoxaspiro[5,5]undecane as β-crystal nucleating agent and 0.1 parts by mass of oxidation inhibitor (manufactured by Ciba Specialty Chemicals Corporation; IRGANOX-B225) were added, which were melt-kneaded at 270°C using a co-rotating twin screw extruder (manufactured by Toshiba Machine Co., Ltd.; port diameter: 040 mm; screw effective length: L/D = 32) then extruded from a strand die into a water bath and pelletized by cutting while pulling-out the strand, thereby obtaining a polypropylene resin composition (A1).
With respect to 100 parts by mass of high density polyethylene (manufactured by Prime Polymer Co., Ltd.; Hi-ZEX 2200J; MFR: 5.2 g/10 minutes), 2.5 parts by mass of polyethylene crystal nucleating agent master batch (manufactured by Riken Vitamin Co., Ltd.; RIKEMASTER CN-002) was added, which was melt-kneaded at 200°C using a co-rotating twin screw extruder (manufactured by Toshiba Machine Co., Ltd.; port diameter: 040 mm; screw effective length: L/D = 32) then extruded from a strand die into a water bath and pelletized by cutting while pulling-out the strand, thereby obtaining a polyethylene resin composition (B1). At this time, the melting point of the polyethylene resin composition (B1) was 135°C and the MFR was 6.5 g/10 minutes.
So as to have the polypropylene resin composition (A1) in the front and back layers and the polyethylene resin composition (B1) in the middle layer, the resins were melted at 200°C using different single-screw extruders, layered and extruded from a two-species-and-three layer multi-manifold T-die so that the film-thickness ratios were A1/B1/A1 = 3/1/3, then, dropped onto casting rolls at 124°C and solidified by cooling for 15 seconds, thereby obtaining a layered pore-free sheet (S1). The lip gap of the T-die was 1 mm and the speed of the casting rolls was 3 m/minute.
The layered pore-free sheet (S1) was stretched biaxially in succession by stretching to 4.5-fold longitudinally at 105°C and then stretching to 2.0-fold transversally at 125°C, next, fixed by heating at 135°C for 10 seconds and relaxed 5% transversally by heating at 125°C, thereby obtaining a polyolefin resin porous film.

[Example 2]

A polyolefin resin porous film was obtained in a similar manner to Example 1, except that the layered pore-free sheet (S1) was stretched biaxially in succession by stretching to 4.5-fold longitudinally at 105°C and then stretching to 2.0-fold transversally at 117°C.

[Example 3]

A polyolefin resin porous film was obtained in a similar manner to Example 1, except that the layered pore-free sheet (S1) was stretched biaxially in succession by stretching to 4.5-fold longitudinally at 105°C and then stretching to 2.0-fold transversally at 110°C.

[Example 4]

To 65 parts by mass of high density polyethylene (manufactured by Prime Polymer Co., Ltd.; HI-ZEX 3600F; MFR: 1.0 g/10 minutes, melting point: 133°C) and 35 parts by mass of high density polyethylene (manufactured by Prime Polymer Co., Ltd.; HI-ZEX 2200J; MFR: 5.2g/10 minutes, melting point: 135°C), 2.5 parts by mass of polyethylene crystal nucleating agent master batch (manufactured by Riken Vitamin Co., Ltd.; RIKEMASTER CN-002) was added, which was melt-kneaded at 200°C using a co-rotating twin screw extruder (manufactured by Toshiba Machine Co., Ltd.; port diameter: 040 mm; screw effective length: L/D = 32) then extruded from a strand die into a water bath and pelletized by cutting while pulling-out the strand, thereby obtaining a polyethylene resin composition (B2). At this time, the melting point of the polyethylene resin composition (B2) was 134°C and the MFR was 2.4 g/10 minutes.
So as to have the polypropylene resin composition (A1) in the front and back layers and the polyethylene resin composition (B2) in the middle layer, the resins were melted at 200°C using different single-screw extruders, layered and extruded from a two-species-and-three layer multi-manifold T-die so that the film-thickness ratios were A1/B2/A1 = 3/1/3, then, dropped onto casting rolls at 124°C and solidified by cooling for 15 seconds, thereby obtaining a layered pore-free sheet (S2). The lip gap of the T-die was 1 mm and the speed of the casting rolls was 3 m/minute.

The layered pore-free sheet (S2) was stretched biaxially in succession by stretching to 4.5-fold longitudinally at 120°C and then stretching to 2.0-fold transversally at 110°C, next, fixed by heating at 135°C for 10 seconds and relaxed 5% transversally by heating at 125°C, thereby obtaining a polyolefin resin porous film.

[Comparative Example 1]

With respect to 100 parts by mass of high density polyethylene (manufactured by Prime Polymer Co., Ltd., HI-ZEX 3600F, MFR: 1.0 g/10 minutes, melting point: 133°C), 2.5 parts by mass of polyethylene crystal nucleating agent master batch (manufactured by Riken Vitamin Co., Ltd.; RIKEMASTER CN-002) was added, which was melt-kneaded at 200°C using a co-rotating twin screw extruder (manufactured by Toshiba Machine Co., Ltd.; port diameter: 040 mm; screw effective length: L/D = 32) then extruded from a strand die into a water bath and pelletized by cutting while pulling-out the strand, thereby obtaining a polyethylene resin composition (B3). At this time, the melting point of the polyethylene resin composition (B3) was 133°C and the MFR was 1.5 g/10 minutes.

So as to have the polypropylene resin composition (A1) in the front and back layers and the polyethylene resin composition (B3) in the middle layer, the resins were melted at 200°C using different single-screw extruders, layered and extruded from a two-species-and-three layer multi-manifold T-die so that the film-thickness ratios were A1/B3/A1 = 3/1/3, then, dropped onto casting rolls at 124°C and solidified by cooling for 15 seconds, thereby obtaining a layered pore-free sheet (S3). The lip gap of the T-die was 1 mm and the speed of the casting rolls was 3 m/minute.

The layered pore-free sheet (S3) was stretched biaxially in succession by stretching to 4.5-fold longitudinally at 120°C and then stretching to 2.0-fold transversally at 125°C, next, fixed by heating at 135°C for 10 seconds and relaxed 5% transversally by heating at 125°C, thereby obtaining a polyolefin resin porous film.

[Comparative Example 2]

A polyolefin resin porous film was obtained in a similar manner to Comparative Example 1, except that the layered pore-free sheet (S3) was stretched biaxially in succession by stretching to 4.5-fold longitudinally at 120°C and then stretching to 2.0-fold transversally at 110°C.

[Comparative Example 3]

A polyolefin resin porous film was obtained in a similar manner to Comparative Example 1, except that the layered pore-free sheet (S3) was stretched biaxially in succession by stretching to 4.5-fold longitudinally at 120°C and then stretching to 2.0-fold transversally at 100°C.

[Comparative Example 4]

With respect to 90 parts by mass of high density polyethylene (manufactured by Prime Polymer Co., Ltd., HI-ZEX 1700J, MFR: 16g/10 minutes, melting point: 135°C) and 10 parts by mass of microcrystalline wax (manufactured by Nippon Seiro Co., Ltd; HiMic-1090), 2.5 parts by mass of polyethylene crystal nucleating agent master batch (manufactured by Riken Vitamin Co., Ltd.; RIKEMASTER CN-002) was added, which was melt-kneaded at 200°C using a co-rotating twin screw extruder (manufactured by Toshiba Machine Co., Ltd.; port diameter: 040 mm; screw effective length: L/D = 32) then extruded from a strand die into a water bath and pelletized by cutting while pulling-out the strand, thereby obtaining a polyethylene resin composition (B4). At this time, the melting point of the polyethylene resin composition (B4) was 135°C and the MFR was 22.2 g/10 minutes.

So as to have the polypropylene resin composition (A1) in the front and back layers and the polyethylene resin composition (B4) in the middle layer, the resins were melted at 200°C using different single-screw extruders, layered and extruded from a two-species-and-three layer multi-manifold T-die so that the film-thickness ratios were A1/B4/A1 = 3/1/3, then, dropped onto casting rolls at 124°C and solidified by cooling for 15 seconds, thereby attempting to obtain a layered pore-free sheet (S4); however, a stable film production could not be performed.

[Comparative Example 5]

So as to have the polypropylene resin composition (A1) in the front and back layers and a linear low density polyethylene (manufactured by Japan polyethylene Corporation, NOVATEC LL UF240, melting point: 123°C, MFR: 2.2g/ 10 minutes) in the middle layer as the polyethylene resin composition (B5), the resins were melted at 200°C using different single-screw extruders, layered and extruded from a two-species-and-three layer multi-manifold T-die so that the film-thickness ratios were A1/B5/A1 = 3/1/3, then, dropped onto casting rolls at 124°C and solidified by cooling for 15 seconds, thereby obtaining a layered pore-free sheet (S5) which thickness was 70 to 90 $\mu$m. The lip gap of the T-die was 1 mm and the speed of the casting rolls was 3 m/minute.

The layered pore-free sheet (S5) was stretched biaxially in succession by stretching to 4.5-fold longitudinally at 120°C and then stretching to 2.0-fold transversally at 125°C, next, fixed by heating at 135°C for 10 seconds and relaxed 5% transversally by heating at 125°C, thereby obtaining a polyolefin resin porous film.

Measurements and evaluations of various properties were carried out for the obtained polyolefin resin porous films in the following manner, which results are compiled in Table 1.

(1) Thickness measurement

Thickness was measured at 30 locations non-specifically in the polyolefin resin porous film plane with a 1/1,000 mm dial gauge, and the mean value thereof served as the film thickness.

(2) Air-permeability measurement

Air-permeability was measured under air atmosphere at 25°C, according to JIS P8117. For the measurements a digital-type Oken-method air-permeability-dedicated machine (manufactured by Asahi Seiko Co., ltd.) was used.

(3) Polyethylene resin composition (B) melting point measurement

Using a differential scanning calorimeter (DSC-7) manufactured by Perkin-Elmer, a polyolefin resin porous film was raised in temperature from 25°C to 200°C at 10°C/minute heating rate, then retained for one minute, next, lowered in temperature from 200°C to 25°C at 10°C/minute cooling rate, then, retained for one minute, and further raised in temperature again from 25°C to 200°C at 10°C/minute heating rate to measure the melting point. The measurement was carried out under nitrogen atmosphere. The peak temperature of the heat of crystallization derived from the melting of the polyethylene resin during this re-raise in temperature, was recorded. If a plurality of the peak temperature manifested, the lowest peak temperature is the melting point of the polyethylene resin composition (B).

(4) Thermal shrink rate measurement

A test piece was cut out from the polyolefin resin porous film into a shape of 150 mm in length and 10 mm in width with respect to the measurement direction, and reference lines were traced spaced by 100 mm with respect to the length direction. This test piece was produced with respect to MD and TD respectively and placed in an oven (manufactured by Daiei Kagaku Seiki Mfg. Co., Ltd.; DK-1M) set at 105°C in a hanging state, pinched by a clip on the outside of the reference lines of the test piece. After one hour, the test piece was taken out and the spacing of the reference lines (mm) was measured. The thermal shrink rate was calculated based on the following formula:

$$\text{Thermal shrink rate (\%)} = 100 - L$$

(5) Melt flow rate (MFR) measurement

The MFR of the polypropylene resin composition (A) was measured according to JIS K7210, under the conditions of 230°C in temperature and 2.16 kg load. In addition, The MFR of the polyethylene resin composition (B) was measured according to JIS K7210, under the conditions of 190°C in temperature and 2.16 kg load.

(6) Evaluation of the presence or absence of shutdown function

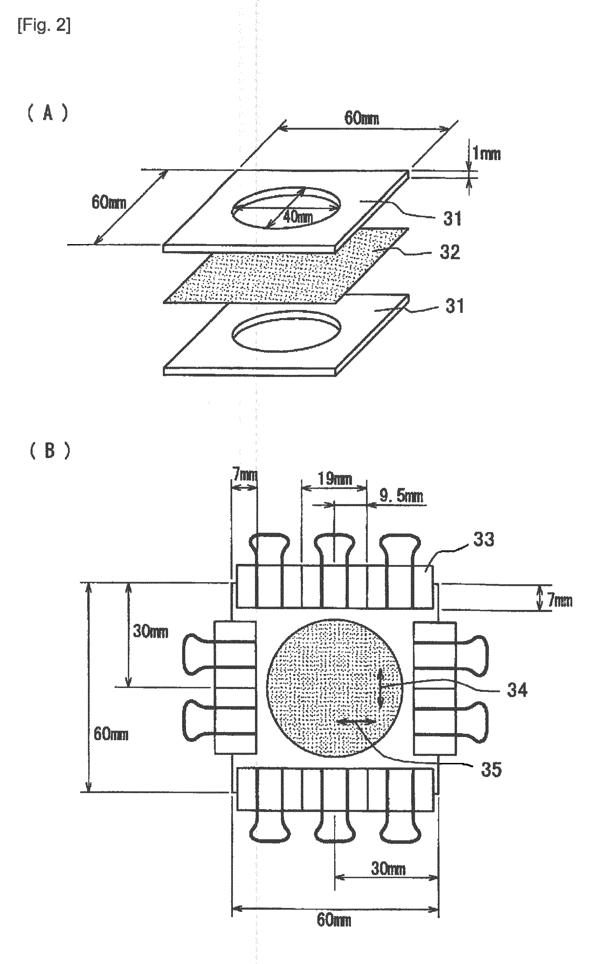

A polyolefin resin porous film was cut out into a square of 60 mm vertically and 60 mm horizontally, and sandwiched between two aluminum plates (material = JIS A5052; size = 60 mm vertical, 60 mm horizontal; thickness: 1 mm) which center had a hole open in the shape of a 40 mmØ circle as shown in Fig. 2 (A), and the periphery was secured with clips (manufactured by Kokuyo; double-clip "KURI-J35") as shown in Fig. 2 (B). Next, glycerin (manufactured by Nacalai Tesque; 1 st grade) was filled so as to reach 100 mm from the bottom surface. Next, the film immobilized with two sheets of aluminum plate was immersed into the center of an oil bath at 135°C (manufactured by As One Corporation; OB-200A) and heated for 5 seconds. Immediately after heating, the film was immersed in a cooling bath filled with glycerin at 25°C prepared separately, cooled for 5 minutes, then, washed with 2-propanol (manufactured by Nacalai Tesque; special grade) and acetone (manufactured by Nacalai Tesque; special grade), and dried under air atmosphere at 25°C for 15 minutes. Air-permeability of this film after drying was measured according to the method of (2) described earlier.

If air-permeability was 50,000 seconds/100 ml or greater as per the measurement, the film was assessed to have shutdown function, and the measurement results were classified as follows:

"O(circle)": has shutdown function: 50,000 seconds/100 ml or greater
"Δ(triangle)": has shutdown function but insufficient: 10,000 seconds/100 ml or greater but less than 50,000 seconds/ 100 ml
" × (cross)": has no shutdown function: less than 10,000 seconds/100 ml

(7) Differential scanning calorimeter (DSC)

Using a differential scanning calorimeter (DSC-7) manufactured by Perkin-Elmer, a polyolefin resin porous film was raised in temperature from 25°C to 200°C at 10°C/minute heating rate, then retained for one minute, next, lowered in temperature from 200°C to 25°C at 10°C/minute cooling rate, then, retained for one minute, and further raised in temperature again from 25°C to 240°C at 10°C/minute heating rate. The measurement was carried out with 10mg sample amount and under nitrogen atmosphere. According to whether or not a peak was detected at 145 to 160°C, which is the crystal-melting peak temperature (Tmβ) derived from a β-crystal of polypropylene resin, during this re-rise in temperature, the presence or absence of β-crystal activity was evaluated with the following criteria:

"O(circle)": if Tmβ was detected within the range of 145°C to 160°C (presence of β-crystal activity)
" × (cross)": if Tmβ was not detected within the range of 145°C to 160°C (no β-crystal activity)

(8) Wide-angle X-ray diffraction measurement (XRD)

A polyolefin resin porous film was cut out into a square of 60 mm vertically and 60 mm horizontally, and sandwiched between two aluminum plates (material: JIS A5052; size: 60 mm vertical, 60 mm horizontal; thickness: 1 mm) which center had a hole open in the shape of a 40 mmØ circle as shown in Fig. 2 (A), and the periphery was secured with clips as shown in Fig. 2 (B).

The polyolefin resin porous film in a constrained state by two aluminum plates in this way was introduced into a programmable mechanical convection oven (manufactured by Yamato Scientific Co., Ltd., Model: DKN602) at a setting temperature of 180°C and a display temperature of 180°C, retained for three minutes, then, the setting temperature was changed to 100°C, and slow cooling was carried out to 100°C over 10 minutes or longer time. At the time point where the display temperature became 100°C, polyolefin resin porous film was taken out, and for the polyolefin resin porous film obtained by cooling under 25°C atmosphere for 5 minutes still in a constrained stated by two aluminum plates, wide-angle X-ray diffraction measurement was carried out for the central 40 mmØ circular portion, with the following measurement conditions:

Wide-angle X-ray diffractometer: manufactured by Mac Science; Model No.: XMP18A
X-ray source: CuKα beam; output: 40kV, 200mA
Scanning method: 2θ/θ scan, 2θ range: 5° to 25°; scanning interval: 0.05°; scanning speed: 5°/min

For the obtained diffraction profile, the presence or absence of β-crystal activity was evaluated from the peak derived from the (300) plane of a β-crystal of polypropylene resin, as follows:

"O(circle)": if a peak was detected in a range of 2θ = 16.0 to 16.5°: presence of β-crystal activity
" × (cross)": if a peak was not detected in a range of 2θ = 16.0 to 16.5°: no β-crystal activity

If the film piece cannot be cut out into a square of 60 mm vertically and 60 mm horizontally, adjustments were made so that the porous film was placed in the center in the 40 mmØ circular hole.

[Table 1]

| | | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|---|
| Polypropylene composition (A) | Composition | - | A1 | A1 | A1 | A1 | A1 | A1 | A1 | A1 | A1 |
| Polyethylene resin composition (B) | Composition | - | B1 | B1 | B1 | B2 | B3 | B3 | B3 | B4 | B5 |
| | Melting point | °C | 135 | 135 | 135 | 134 | 133 | 133 | 133 | 135 | 123 |
| | MFR | g/10 mn | 6.5 | 6.5 | 6.5 | 2.4 | 1.5 | 1.5 | 1.5 | 22.2 | 2.2 |
| Thickness | | $\mu$m | 26 | 23 | 25 | 26 | 23 | 25 | 22 | Stable film production impossible | 22 |
| Air permeability | | Seconds /100 ml | 101 | 368 | 415 | 461 | 318 | 400 | 380 | | >10000 |
| Thermal shrink rate | MD | % | 5 | 5 | 6 | 6 | 5 | 5 | 7 | | 5 |
| | TD | % | 7 | 8 | 9 | 9 | 7 | 10 | 11 | | 8 |
| Shutdown function | | - | ○ | ○ | ○ | ○ | × | Δ | ○ | | - |
| β-crystal activity | DSC | - | ○ | ○ | ○ | ○ | ○ | ○ | ○ | | ○ |
| | XRD | - | ○ | ○ | ○ | ○ | ○ | ○ | ○ | | ○ |

The physical properties values obtained in each example and comparative example are shown in Table 1. In comparison to the films of the comparative examples, the polyolefin resin porous films of the examples were found to have the two characteristics of low TD thermal shrink rate and having shutdown function. In addition, with a small air-permeability, Example 1 was a particularly preferred mode among the examples.

Meanwhile, with the MFR of the polyethylene resin composition (B) being smaller than 2.0 g/10 minutes, Comparative Example 1 was found to be incapable of being conferred a shutdown function even if the stretching process is carried out with the same stretching conditions as Example 1. In addition, from Comparative Example 3, due to the MFR of the polyethylene resin composition (B) being smaller than 2.0 g/10 minutes, even if a shutdown function could be conferred by lowering the transversal stretching temperature, as the TD thermal shrink rate was high and dimensional stability was not excellent, battery safety problems arose, such as internal short-circuit. For Comparative Example 4, since the MFR of the polyethylene resin composition (B) is larger than 15 g/10 minutes, stable film production was difficult. For Comparative Example 5, since the melting point of the polyethylene resin composition (B) is below 130°C, a polyolefin resin porous film with low air-permeability could not be obtained.

[industrial applicability]

Since the polyolefin resin porous film of the present invention has excellent dimensional stability and shutdown function, and is provided with high air-permeating property, it can be used as packaging article, hygiene article, animal industry article, agricultural article, architectural article, medical article, separatory membrane, light diffuser plate, reflection sheet or battery separator, and can be used suitable in particular as a separator for lithium ion batteries used as power sources for various electronic devices and the like.

**Claims**

1. A polyolefin resin porous film having at least one layer each of a layer comprising as the main component a polypropylene resin composition (A) and a layer comprising as the main component a polyethylene resin composition (B) fulfilling the conditions (i) to (ii) below:

     (i) the melting point of the polyethylene resin composition (B) is 130°C or higher
     (ii) the melt flow rate (MFR) of the polyethylene resin composition (B) is 2.0 to 15 g/10 minutes

2. The polyolefin resin porous film according to claim 1, having β-crystal activity.

3. The polyolefin resin porous film according to claim 1 or 2, wherein thermal shrink rate is less than 10% in the perpendicular direction with respect to the flow direction of the polyolefin resin porous film.

4. The polyolefin resin porous film according to any of claims 1 to 3, wherein air-permeability is 10 to 800 seconds/100 ml.

5. The polyolefin resin porous film according to any of claims 1 to 4, having a shutdown function.

6. A battery comprising the polyolefin resin porous film according to any of claims 1 to 5.

[Fig. 1]

[Fig. 2]

( A )

60mm

60mm

1mm

40mm

31

32

31

( B )

7mm

19mm

9.5mm

33

7mm

30mm

34

60mm

35

30mm

60mm

# INTERNATIONAL SEARCH REPORT

| | International application No. |
|---|---|
| | PCT/JP2011/056070 |

**A. CLASSIFICATION OF SUBJECT MATTER**
*B32B27/32*(2006.01)i, *B32B5/32*(2006.01)i, *H01M2/16*(2006.01)i

According to International Patent Classification (IPC) or to both national classification and IPC

**B. FIELDS SEARCHED**

Minimum documentation searched (classification system followed by classification symbols)
B32B1/00-43/00, H01M2/14-2/18

Documentation searched other than minimum documentation to the extent that such documents are included in the fields searched
Jitsuyo Shinan Koho        1922-1996    Jitsuyo Shinan Toroku Koho    1996-2011
Kokai Jitsuyo Shinan Koho  1971-2011    Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-311220 A (Mitsubishi Plastics, Inc.), 25 December 2008 (25.12.2008), claims 1, 6, 7, 11; paragraphs [0075], [0095], [0098], [0119] (Family: none) | 1-6 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 June, 2011 (13.06.11) | 21 June, 2011 (21.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009019118 A
- JP 2009114434 A
- JP 3523404 B
- JP 2003306585 A
- JP H06289566 B
- JP H09194650 B

**Non-patent literature cited in the description**

- **A. ZAMBELLI et al.** *Macromolecules,* 1975, vol. 8, 687